# EUROPEAN PATENT APPLICATION

(11) **EP 4 796 356 A1**
(43) Date of publication of application: **26.08.2026**
(21) Application number: 25225645.8
(22) Date of filing: 19.12.2025
(51) Int. Cl.: B60K 1/00, B60K 1/02, B60K 1/04

(54) **ELECTRIC VEHICLE**

(30) Priority: 21.02.2025 JP 2025026599
(71) Applicant: Toyota Jidosha Kabushiki Kaisha, Toyota-shi, Aichi-ken 471-8571 (JP)
(72) Inventor: SASAKI, Shoichi, TOYOTA-SHI, AICHI-KEN, 471-8571 (JP); TOMITA, Makoto, TOYOTA-SHI, AICHI-KEN, 471-8571 (JP); NISHIGAYA, Masabumi, TOYOTA-SHI, AICHI-KEN, 471-8571 (JP); KAWASHIMA, Takahiro, TOYOTA-SHI, AICHI-KEN, 471-8571 (JP); HARADA, Taku, TOYOTA-SHI, AICHI-KEN, 471-8571 (JP); HISHINUMA, Shoji, TOYOTA-SHI, AICHI-KEN, 471-8571 (JP); OHTA, Chikashi, TOYOTA-SHI, AICHI-KEN, 471-8571 (JP)
(74) Representative: Cabinet Beau de Loménie

(57) **Abstract**

An electric vehicle (10) includes a passenger compartment and a front compartment (10B). The front compartment (10B) is disposed forward of the passenger compartment. A first electric power controller (13B) is disposed in the front compartment. A battery pack (14) is disposed below a floor panel, which forms the floor surface of the passenger compartment. A second electric power controller (17B) is disposed rearward of the battery pack (14). The battery pack (14) includes a first connection portion and a second connection portion. The first connection portion and the first electric power controller (13B) are electrically connected by a first cable (51). The second connection portion and the second electric power controller (17B) are electrically connected by a second cable (52).

## Description

### CROSS-REFERENCE TO RELATED APPLICATIONS

This application is based upon and claims the benefit of priority from Japanese Patent Application No. 2025-026599, filed on February 21, 2025, the entire contents of which are incorporated herein by reference and to which the person of the art can refer when considering the present disclosure.

### BACKGROUND

### 1. Field

The present disclosure relates to an electric vehicle.

### 2. Description of Related Art

JP2020-055423A discloses a routing structure in which a branch connector is used to branch a power supply cable at a location proximate to a motor serving as a power source of a vehicle. This routing structure reduces the total length of cables required to supply power to electrical devices, such as the motor and a DC/DC converter disposed near the motor.

In some electric vehicles, motors as power sources are disposed in a front portion and a rear portion of the vehicle, respectively. In the above-described electric vehicle, when a branch connector is provided near one of the motors, it is necessary to arrange a long cable extending from the front portion to the rear portion of the vehicle in order to electrically connect the branch connector and the other motor.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electric vehicle includes a passenger compartment, a floor panel that forms a floor surface of the passenger compartment, a front compartment disposed forward of the passenger compartment in a vehicle front-rear direction, a first motor and a second motor that are power sources, a battery cell configured to store electric power to be supplied to the first motor and the second motor, a battery pack that accommodates the battery cell therein, a first electric power controller configured to drive the first motor, and a second electric power controller configured to drive the second motor. The first motor and the first electric power controller are disposed in the front compartment. The battery pack is disposed below the floor panel in a vehicle vertical direction. The second motor and the second electric power controller are disposed rearward of the battery pack in the vehicle front-rear direction. The battery pack includes a first connection portion and a second connection portion. The first connection portion and the first electric power controller are electrically connected by a first cable. The second connection portion and the second electric power controller are electrically connected by a second cable.

Other features and aspects will be apparent from the following detailed description, the drawings, and the claims.

### BRIEF DESCRIPTION OF THE DRAWINGS

Fig. 1 is a schematic diagram showing an internal structure of a front portion of an electric vehicle according to an embodiment.
Fig. 2 is a schematic diagram showing a configuration of a drivetrain and an electrical system of the electric vehicle shown in Fig. 1.
Fig. 3 is a schematic diagram showing an arrangement of devices of the electric vehicle shown in Fig. 1.
Fig. 4 is a schematic diagram showing an arrangement of a floor panel, a center tunnel, and a battery pack of the electric vehicle shown in Fig. 1.
Fig. 5 is a schematic diagram showing an arrangement of devices of an electric vehicle of a comparative example.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

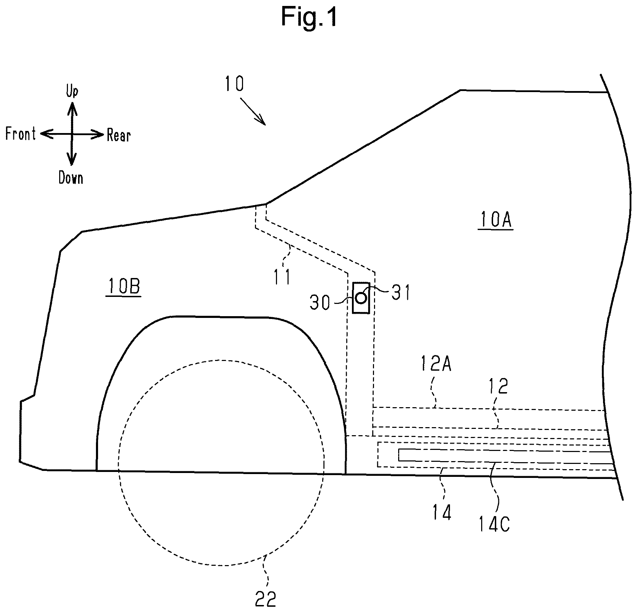

An electric vehicle 10 according to an embodiment will now be described with reference to Figs. 1 to 4. In the following description, the terms front, rear, right, left, up, and down refer to directions as viewed from the perspective of an occupant facing forward in the electric vehicle 10. The left-right direction corresponds to the vehicle width direction.

### Configuration of the Electric Vehicle 10

Fig. 1 schematically shows an internal structure of a front portion of the electric vehicle 10 when the electric vehicle 10 is viewed from the left side.

As shown in Fig. 1, the electric vehicle 10 includes a dashboard panel 11, a floor panel 12, and a battery pack 14. The dashboard panel 11 partitions an internal space of the electric vehicle 10 into a passenger compartment 10A and a front compartment 10B. The front compartment 10B is provided forward of the passenger compartment 10A in the vehicle front-rear direction. The floor panel 12 forms a floor surface of the passenger compartment 10A. The battery pack 14 is disposed below the floor panel 12 in a vehicle vertical direction.

The battery pack 14 accommodates multiple battery cells 14C therein. In Figs. 1 to 3, and 5, the battery cells 14C, which are tightly packed within the battery pack 14, are collectively depicted surrounded by a long-dash short-dash line. The battery cells 14C store electric power to be supplied to a first motor-generator MG1, a second motor-generator MG2, and a second motor 17A, which are described below.

The floor panel 12 includes a tunnel portion 12A. The tunnel portion 12A defines a center tunnel 70 by protruding toward the passenger compartment 10A. The tunnel portion 12A extends from a front side to a rear side of the floor panel 12.

The electric vehicle 10 includes a charging port 30 that is connectable to an external power supply in order to charge the battery cells 14C with electric power supplied from the external power supply. The charging port 30 is disposed in a side surface of the electric vehicle 10 and forward of the battery pack 14.

The charging port 30 is connectable to a connector of an external power supply. Specifically, the charging port 30 is provided with a charging inlet 31, to which a connector of an external power supply is connected. When the connector of the external power supply is connected to the charging inlet 31, the electric vehicle 10 is connected to the external power supply.

### Drivetrain and Electrical System of the Electric Vehicle 10

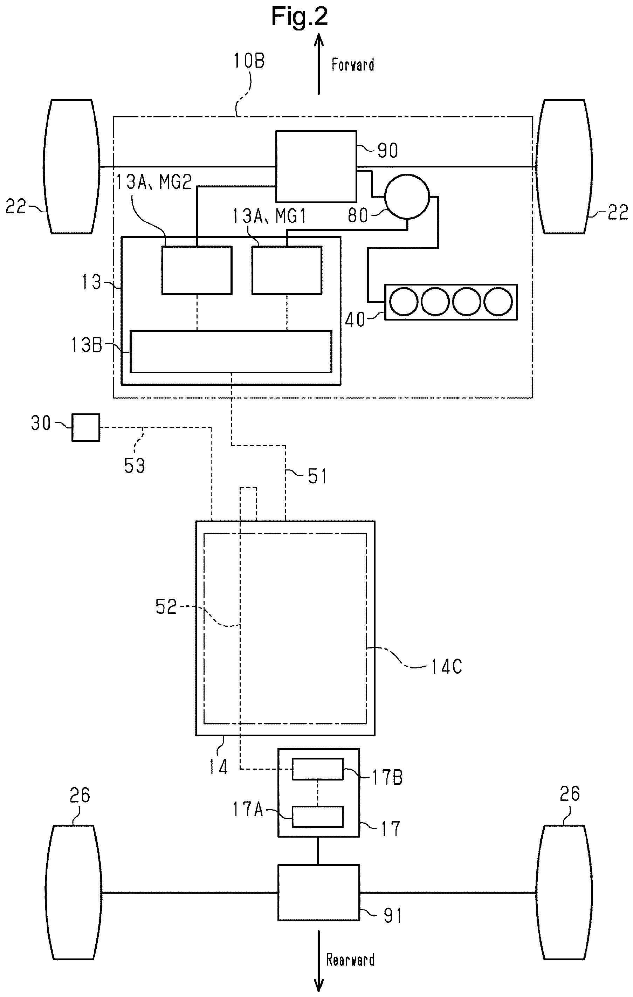

Fig. 2 schematically shows a configuration of a drivetrain and an electrical system of the electric vehicle 10. Broken lines shown in Fig. 2 indicate electrical connections.

As shown in Fig. 2, the electric vehicle 10 includes, in the front compartment 10B, an engine 40, the first motor-generator MG1, the second motor-generator MG2, a first electric power controller 13B, a power split mechanism 80, and a speed reduction mechanism 90. The first motor-generator MG1, the second motor-generator MG2, and the first electric power controller 13B form a first integrated electromechanical unit 13.

The electric vehicle 10 includes a second integrated electromechanical unit 17 and a rear-wheel speed reduction mechanism 91, which are located rearward of the battery pack 14. The second integrated electromechanical unit 17 is formed by integrating the second motor 17A and a second electric power controller 17B.

The engine 40 is coupled to the left and right front wheels 22 via the power split mechanism 80 and the speed reduction mechanism 90. The power split mechanism 80 is a planetary gear mechanism. The power split mechanism 80 is capable of splitting the driving force among the engine 40, the first motor-generator MG1, and the left and right front wheels 22. The power split mechanism 80 and the speed reduction mechanism 90 form a power transmission mechanism. The rotational power of the engine 40 is transmitted to the front wheels 22 via the power transmission mechanisms. The engine 40 is a power source of the electric vehicle 10.

The first motor-generator MG1 is coupled to the power split mechanism 80. The first motor-generator MG1 is, for example, a three-phase AC motor-generator. The first motor-generator MG1 is electrically connected to the battery pack 14 via the first electric power controller 13B.

The second motor-generator MG2 is coupled to the left and right front wheels 22 via the speed reduction mechanism 90. The second motor-generator MG2 is, for example, a three-phase AC motor-generator. The second motor-generator MG2 is electrically connected to the battery pack 14 via the first electric power controller 13B.

The first motor-generator MG1 functions as a motor that generates rotational driving force in response to a supply of electric power from the first electric power controller 13B. The first electric power controller 13B drives the first motor-generator MG1. The rotational driving force of the first motor-generator MG1 is transmitted to the left and right front wheels 22 via the power split mechanism 80 and the speed reduction mechanism 90. The first motor-generator MG1 functions as a first motor 13A that is a power source of the electric vehicle 10. The first motor-generator MG1 also acts as a starter to drive the crankshaft, which is the output shaft of the engine 40, when starting the engine 40.

The second motor-generator MG2 functions as a motor that generates rotational driving force in response to a supply of electric power from the first electric power controller 13B. The first electric power controller 13B drives the second motor-generator MG2. The rotational driving force of the second motor-generator MG2 is transmitted to the left and right front wheels 22 via the speed reduction mechanism 90. The second motor-generator MG2 functions as a first motor 13A that is a power source of the electric vehicle 10. The first integrated electromechanical unit 13 is a unit in which one or more first motors 13A and the first electric power controller 13B are integrated.

The first motor-generator MG1 generates electric power by receiving the driving force of the engine 40 or the driving force from the front wheels 22. AC power generated by the first motor-generator MG1 is converted into DC power by the first electric power controller 13B. The battery cells 14C are charged with DC power converted by the first electric power controller 13B. The first electric power controller 13B functions as an inverter. The first electric power controller 13B may function as a converter that boosts the electric power supplied from the battery cells 14C.

DC power is supplied from the battery cells 14C to the first electric power controller 13B. The supplied DC power is converted into AC power by the first electric power controller 13B. The AC power converted by the first electric power controller 13B is supplied to the second motor-generator MG2.

The electric vehicle 10 performs charging through regenerative braking. For example, when the electric vehicle 10 is decelerated, the second motor-generator MG2 generates electric power using the driving force from the front wheels 22. The battery cells 14C are charged with the generated electric power. The second motor-generator MG2 functions as a power generator. AC power generated by the second motor-generator MG2 is converted into DC power by the first electric power controller 13B. The battery cells 14C are charged with DC power converted by the first electric power controller 13B.

The second motor 17A is coupled to the left and right rear wheels 26 via the rear-wheel speed reduction mechanism 91. The second motor 17A, for example, a three-phase AC motor-generator. The second motor 17A is electrically connected to the battery pack 14 via the second electric power controller 17B.

The second motor 17A functions as a motor that generates rotational driving force in response to a supply of electric power from the second electric power controller 17B. The second electric power controller 17B drives the second motor 17A. The rotational driving force of the second motor 17A is transmitted to the left and right rear wheels 26 via the rear-wheel speed reduction mechanism 91, which is a power transmission mechanism. The second motor 17A functions as a power source of the electric vehicle 10.

DC power is supplied from the battery cells 14C to the second electric power controller 17B. The supplied DC power is converted into AC power by the second electric power controller 17B. The AC power converted by the second electric power controller 17B is supplied to the second motor 17A.

The electric vehicle 10 performs charging through regenerative braking. For example, when the electric vehicle 10 is decelerated, the second motor 17A generates electric power using the driving force from the left and right rear wheels 26. The battery cells 14C are charged with the generated electric power. The second motor 17A functions as a power generator. AC power generated by the second motor 17A is converted into DC power by the second electric power controller 17B. The battery cells 14C are charged with DC power converted by the second electric power controller 17B. The second electric power controller 17B functions as an inverter. The second electric power controller 17B may function as a converter that boosts the electric power supplied from the battery cells 14C.

DC current is supplied to the battery cells 14C from the outside of the electric vehicle 10 through the charging port 30 and the third cable 53. The electric vehicle 10 is a plug-in hybrid electric vehicle.

### Arrangement of Devices of the Electric Vehicle 10

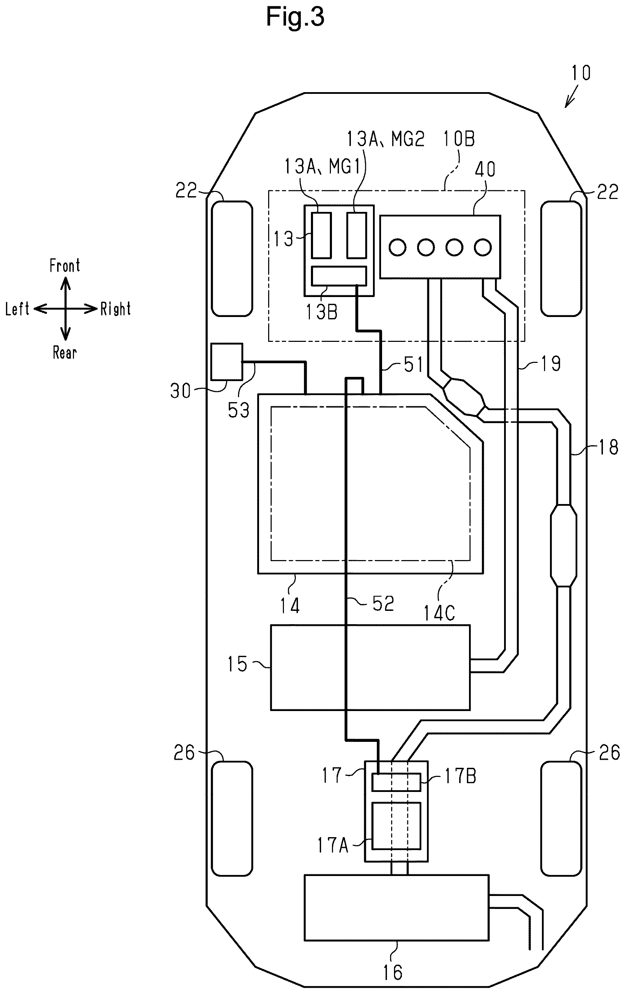

Fig. 3 schematically shows the arrangement of devices disposed below the floor panel 12 when the electric vehicle 10 is viewed from above.

As shown in Fig. 3, the electric vehicle 10 includes the engine 40 and the first integrated electromechanical unit 13 in the front compartment 10B. The electric vehicle 10 includes the left and right front wheels 22, the left and right rear wheels 26, the battery pack 14, a fuel tank 15, a muffler 16, the second integrated electromechanical unit 17, an exhaust pipe 18, and a fuel pipe 19.

The fuel tank 15 stores fuel to be supplied to the engine 40. The fuel pipe 19 connects the fuel tank 15 to the engine 40. The fuel stored in the fuel tank 15 is supplied to the engine 40 through the fuel pipe 19. The fuel pipe 19 is disposed relatively close to the right side of the electric vehicle 10. The exhaust pipe 18 connects the engine 40 to the muffler 16. The exhaust pipe 18 guides exhaust gas discharged from the engine 40 rearward. The exhaust pipe 18 is disposed relatively close to the right side of the electric vehicle 10. The muffler 16 is disposed rearward of the second integrated electromechanical unit 17. The muffler 16 reduces exhaust noise.

The battery pack 14 and the first electric power controller 13B are electrically connected by a first cable 51. The battery pack 14 and the second electric power controller 17B are electrically connected by a second cable 52. The battery pack 14 and the charging port 30 are electrically connected by a third cable 53.

### Connection Between the Battery Pack 14 and the Cables

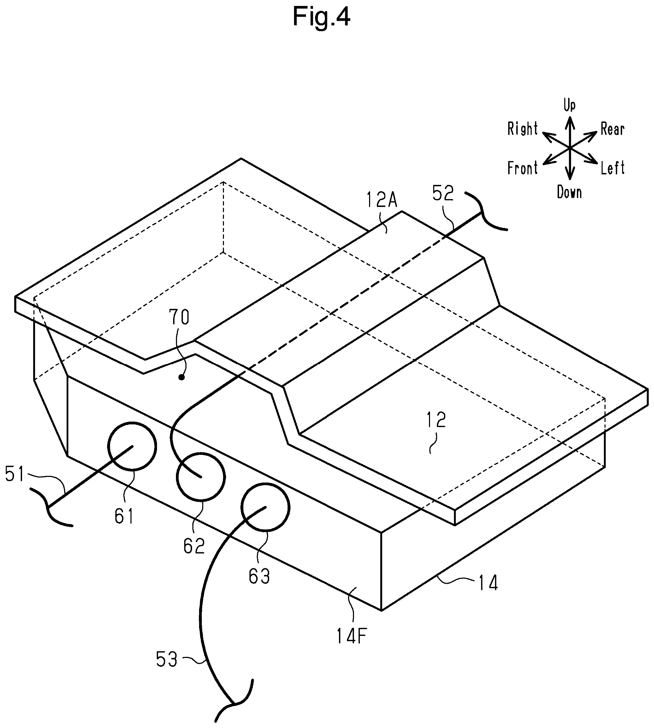

As shown in Fig. 4, the center tunnel 70 is disposed below the floor panel 12 and above the battery pack 14.

The battery pack 14 includes a first connection portion 61, a second connection portion 62, and a third connection portion 63 on a single surface 14F. The single surface 14F is a front surface of the battery pack 14 in the vehicle front-rear direction.

The first connection portion 61 and the first electric power controller 13B are electrically connected by the first cable 51. The second connection portion 62 and the second electric power controller 17B are electrically connected by the second cable 52. The third connection portion 63 and the charging port 30 are electrically connected by the third cable 53. The first connection portion 61, the second connection portion 62, and the third connection portion 63 are protected from the external environment and are shielded to prevent a worker from touching them while electrically conductive. For example, the first connection portion 61, the second connection portion 62, and the third connection portion 63 are protected by a cover.

The second cable 52 extends in the vehicle front-rear direction through the center tunnel 70.

### Operation of the Present Embodiment

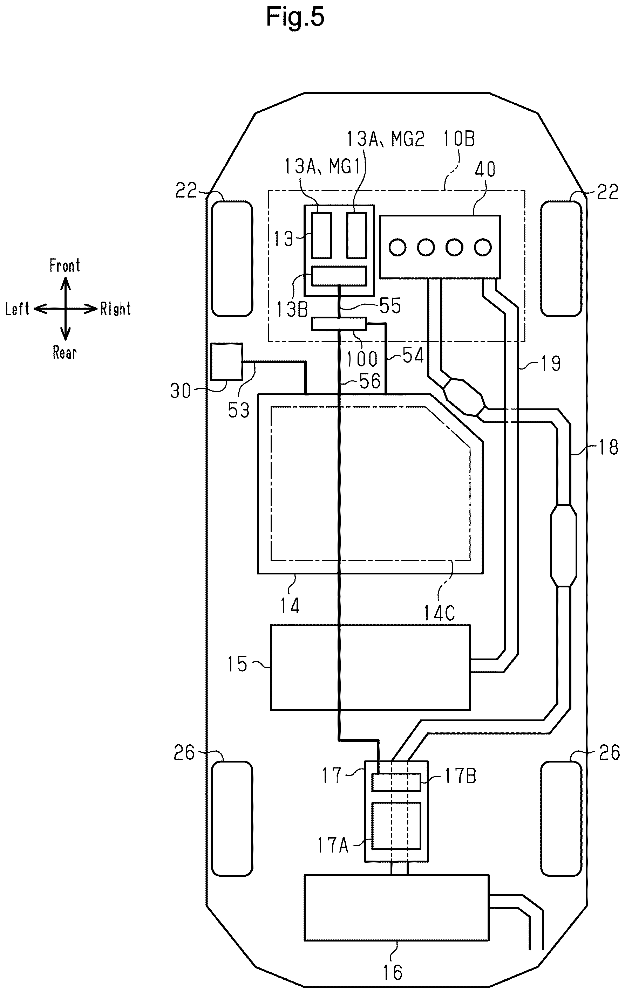

First, problems of a vehicle of a comparative example shown in Fig. 5 will be described. In the vehicle of Fig. 5, a branch connector 100 disposed near the first motor-generator MG1 and the second motor-generator MG2 is electrically connected to the second electric power controller 17B by a sixth cable 56. The branch connector 100 is a device for branching a power supply cable.

As shown in Fig. 5, the vehicle of the comparative example includes the branch connector 100, a fourth cable 54, a fifth cable 55, and the sixth cable 56. The fourth cable 54 electrically connects the battery pack 14 and the branch connector 100. The fifth cable 55 electrically connects the branch connector 100 and the first electric power controller 13B. The sixth cable 56 electrically connects the branch connector 100 and the second electric power controller 17B. The sum of the length of the fourth cable 54 and the length of the fifth cable 55 shown in Fig. 5 is substantially equal to the length of the first cable 51 shown in Fig. 3.

The second electric power controller 17B included in the vehicle of the comparative example is disposed rearward of the battery pack 14, similar to the second electric power controller 17B included in the electric vehicle 10 of the present embodiment. The branch connector 100 is disposed within the front compartment 10B. Specifically, in the vehicle of the comparative example shown in Fig. 5, the sixth cable 56 extends from the inside of the front compartment 10B toward the second electric power controller 17B.

Next, operation of the present embodiment, in which the battery pack 14 and the second electric power controller 17B are electrically connected by the second cable 52, will be described.

As shown in Fig. 3, in the present embodiment, the second cable 52 extends from the battery pack 14 toward the second electric power controller 17B. The battery pack 14 is disposed rearward of the front compartment 10B. Accordingly, in the present embodiment, the cable for supplying electric power to the second electric power controller 17B is shorter than that in the comparative example.

### Advantages of the Present Embodiment

(1) Even when one or more motors are disposed in each of the front portion and the rear portion of the electric vehicle 10, the total length of the cables is relatively short. When the total length of the cables is shortened, the weight of the cables is reduced. Reduction in the weight of the cables reduces the weight of the electric vehicle 10.
(2) In the vehicle of the comparative example shown in Fig. 5, electric power is supplied to the first electric power controller 13B and the second electric power controller 17B by branching the fourth cable 54 connected to the battery pack 14 into the fifth cable 55 and the sixth cable 56 by the branch connector 100. In this case, the following problems may arise. The fourth cable 54, which connects the branch connector 100 and the battery pack 14, must be a cable having a large cross-sectional area, because it must carry a large current to be supplied to both the first electric power controller 13B and the second electric power controller 17B. In contrast, in the electric vehicle 10 of the present embodiment, as shown in Fig. 3, the first cable 51 carries the current supplied to the first electric power controller 13B, while the second cable 52 carries the current supplied to the second electric power controller 17B. The same applies to a case in which electric power is simultaneously supplied from the battery cells 14C to the first electric power controller 13B and the second electric power controller 17B. In the present embodiment, power is supplied simultaneously to the first electric power controller 13B and the second electric power controller 17B using thinner cables than in the comparative example, thereby reducing the weight of the electric vehicle 10.
(3) The first connection portion 61 is electrically connected to the first cable 51. The second connection portion 62 is electrically connected to the second cable 52. The first connection portion 61 and the second connection portion 62 must be protected both from the external environment and from contact by a worker while electrically conductive. The battery pack 14 includes the first connection portion 61 and the second connection portion 62, which need to be protected, on the single surface 14F. Accordingly, the present embodiment readily protects the first connection portion 61 and the second connection portion 62 collectively.
(4) The single surface 14F is the front surface of the battery pack 14 in the vehicle front-rear direction. The first connection portion 61 and the second connection portion 62 also need to be protected from external impact. In the present embodiment, the first connection portion 61 and the second connection portion 62 are readily protected from impacts from the rear.
(5) The floor panel 12 includes the tunnel portion 12A. The tunnel portion 12A defines the center tunnel 70 by protruding toward the passenger compartment 10A. The tunnel portion 12A extends from a front side to a rear side of the floor panel 12. The center tunnel 70 is disposed below the floor panel 12 and above the battery pack 14. The second cable 52 extends in the vehicle front-rear direction through the center tunnel 70. Accordingly, the present embodiment facilitates routing of the second cable 52 in the vehicle front-rear direction than in a vehicle that does not include the center tunnel 70.
(6) The charging port 30 is configured to be connectable to an external power supply. The battery pack 14 includes the third connection portion 63. The third connection portion 63 and the charging port 30 are electrically connected by the third cable 53. The battery pack 14 includes the third connection portion 63 on the single surface 14F. Similarly to the first connection portion 61 and the second connection portion 62, the third connection portion 63 must be protected both from the external environment and from contact by a worker while electrically conductive. The battery pack 14 includes the third connection portion 63, which needs to be protected, on the single surface 14F, on which the first connection portion 61 and the second connection portion 62 are provided. Accordingly, the present embodiment readily protects the first connection portion 61, the second connection portion 62, and the third connection portion 63 collectively.

### Modifications

The above-described embodiment may be modified as follows. The above-described embodiment and the following modifications can be combined as long as the combined modifications remain technically consistent with each other.

The battery pack 14 may include the first connection portion 61 and the second connection portion 62 on the rear surface. The battery pack 14 may include the first connection portion 61 and the second connection portion 62 on the right surface. The battery pack 14 may include the first connection portion 61 and the second connection portion 62 on the left surface.

The battery pack 14 may include the first connection portion 61 and the second connection portion 62 on two different surfaces. For example, the battery pack 14 may include the first connection portion 61 on the single surface 14F and the second connection portion 62 on the rear surface.

The battery pack 14 may include the third connection portion 63 on a surface different from the surface on which the first connection portion 61 or the second connection portion 62 are provided.

The electric vehicle 10 may be a hybrid electric vehicle that does not include the charging port 30. In this case, the battery pack 14 does not include the third connection portion 63.

The second cable 52 does not necessarily need to extend in the vehicle front-rear direction through the center tunnel 70.

The electric vehicle 10 does not necessarily need to include the center tunnel 70. In this case, the floor panel 12 does not necessarily need to include the tunnel portion 12A.

The electric vehicle 10 is not limited to a plug-in hybrid electric vehicle. The electric vehicle 10 may be a battery electric vehicle that does not include the engine 40 and the fuel tank 15.

Various changes in form and details may be made to the examples above without departing from the scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric vehicle (10), comprising:
a passenger compartment (10A);
a floor panel (12) that forms a floor surface of the passenger compartment (10A);
a front compartment (10B) disposed forward of the passenger compartment (10A) in a vehicle front-rear direction;
a first motor (13A) and a second motor (17A) that are power sources;
a battery cell (14C) configured to store electric power to be supplied to the first motor (13A) and the second motor (17A);
a battery pack (14) that accommodates the battery cell (14C) therein;
a first electric power controller (13B) configured to drive the first motor (13A); and
a second electric power controller (17B) configured to drive the second motor (17A), wherein
the first motor (13A) and the first electric power controller (13B) are disposed in the front compartment (10B),
the battery pack (14) is disposed below the floor panel (12) in a vehicle vertical direction,
the second motor (17A) and the second electric power controller (17B) are disposed rearward of the battery pack (14) in the vehicle front-rear direction,
the battery pack (14) includes a first connection portion (61) and a second connection portion (62),
the first connection portion (61) and the first electric power controller (13B) are electrically connected by a first cable (51), and
the second connection portion (62) and the second electric power controller (17B) are electrically connected by a second cable (52).

2. The electric vehicle (10) according to claim 1, wherein the first connection portion (61) and the second connection portion (62) are disposed on a single surface (14F) of the battery pack (14).

3. The electric vehicle (10) according to claim 2, wherein the single surface (14F) is a front surface (14F) of the battery pack (14) in the vehicle front-rear direction.

4. The electric vehicle (10) according to claim 3, wherein
the floor panel (12) includes a tunnel portion (12A) that defines a center tunnel (70) by protruding toward the passenger compartment (10A),
the tunnel portion (12A) extends from a front side to a rear side of the floor panel (12) in the vehicle front-rear direction,
the center tunnel (70) is disposed below the floor panel (12) and above the battery pack (14), and
the second cable (52) extends in the vehicle front-rear direction through the center tunnel (70).

5. The electric vehicle (10) according to any one of claims 2 to 4, further comprising a charging port (30) configured to be connected to a connector of an external power supply, wherein
the battery pack (14) includes a third connection portion (63) on the single surface (14F), and
the third connection portion (63) and the charging port (30) are electrically connected by a third cable (53).
